# EUROPEAN PATENT SPECIFICATION

(11) **EP 2 938 117 B1**
(45) Date of publication and mention of the grant of the patent: **27.12.2017**
(21) Application number: 14290118.0
(22) Date of filing: 24.04.2014
(51) Int. Cl.: H04W 16/18, B64C 39/02, H04W 84/06

(54) **Adjusting geographical position of a drone base station**
Geografische Positionsanpassung einer Drohnenbasisstation
Ajustement de la position gépgraphique d'une station de base drone

(43) Date of publication of application: 28.10.2015
(73) Proprietor: ALCATEL LUCENT, 92100 Boulogne-Billancourt (FR)
(72) Inventor: Aydin, Osman, 70435 Stuttgart (DE); Malanchini, Ilaria, 70435 Stuttgart (DE); Gebert, Jens, 70435 Stuttgart (DE)
(74) Representative: Wetzel, Emmanuelle

(56) References cited:
- EP-A2- 1 523 206
- WO-A1-2011/092698
- CN-A- 103 051 373
- US-A1- 2013 163 565
- US-A1- 2013 337 822

## Description

The present document relates to mobile or flying base stations. In particular, the present document relates a method for providing improved network coverage using a drone base station.

In the next years, mobile network operators will face a tremendous increasing of traffic. At the moment, one of the most promising solutions is small cells deployment. Operators are already actively searching for solutions on where to place new small cells and how to manage them in an energy-efficient way (e.g. when to turn on/off). Operators are well aware that small cell deployment is one of the most critical aspects, because from one side they need to invest a lot of money for each deployed small cell, but at the same time they want to place them in the most promising position in order to be able to handle as much traffic as possible by means of each small cell.

Small cells are a suitable way to increase network capacity at locations at which a network capacity extension is frequently needed. For example, at certain places of a city often the capacity of the currently installed network equipment reaches its limit. By installing an additional small cell at said place which is turned on if a network capacity extension is needed, said network capacity bottleneck may be resolved. However, in case of rare network capacity bottlenecks, the fixed installation of additional network equipment may be too expensive.

US 2013/0163565 A1 discloses a method for deploying mobile access points (AP) in a wireless LAN, wherein a mobile AP is moved to a position which is determined according to service coverage and condensation of mobile user devices.

Hence, there is a need to provide for an improved method for serving user equipments with mobile telecommunication services which provides additional network capacity or network coverage with a high quality of service in an effective and cost-efficient way. Similarly, an improved telecommunication system for flexibly providing additional network capacity or network coverage is desired.

According to a first aspect, a method for providing mobile telecommunication services to user equipments using a drone base station is disclosed. The drone base station comprises base station equipment which is mounted on a drone. The base station equipment may comprise one or more antenna and transceiver for connecting to a number of user equipment and/or to a wider area network. Additional equipment for providing base station functionality may be mounted to the drone. For example, the base station equipment may be battery-driven. A drone according to the invention may be any aerial vehicle, specifically unmanned aerial vehicle, being capable of carrying said base station equipment. The operation of the drone, respectively, the drone base station may be controlled by a control unit mounted to the drone and /or a drone management unit located in the network.

After activating the drone base station, the drone base station may move to an initial geographic position. The initial geographic position may be provided by the network management to the drone base station, for example, via the drone management unit. The initial geographic position may be indicative for the area at which additional network capacity or network coverage is needed and, e.g., determined by the network management or drone management unit based on given information about the territory where the additional network capacity or network coverage is needed, or determined based on information about the positions of user equipment that request service.

After arriving at said initial geographic position, a recording procedure is executed by moving (flying) the drone base station in a probe area around the initial geographic position. Specifically, the drone base station may move around the initial geographic position at different latitude, longitude and altitude values. The probe area where the drone moves around, e.g. a radius around the initial geographic position, may be determined based on information about user equipment seeking service and/or topological information e.g. retrieved from a map. While moving, information regarding radio link conditions between candidate user equipments and the drone base station and/or regarding radio link conditions between the drone base station and a backhaul node serving the drone base station are gathered. In other words, during the recording procedure, the drone base station is located at different positions in an air space near of the initial geographic position. The channel characteristics of radio channels from the drone base station to the user equipments and the channel characteristics of a radio channel from the drone base station to the backhaul node may dependent on the position of the drone base station. For example, at a certain set of positions there is a line-of-sight-connection between the drone base station and the backhaul node whereas in other positions there is a building or other obstacle within the direct connection between the drone base station and the backhaul node which may deteriorate the channel characteristics.

After recording information regarding radio link conditions between candidate user equipments and the drone base station and regarding radio link conditions between the drone base station and a backhaul node, a position adjustment procedure is performed. By means of said position adjustment procedure, a new position of the drone base station is determined based said gathered information, for example based on recorded radio link conditions between candidate user equipment and the drone base station and/or radio link conditions between the drone base station and a backhaul node. The position adjustment procedure may provide an adjusted geographic position, at which there are enhanced channel characteristics between the drone base station and the user equipments, respectively, from the drone base station to the backhaul node.

The position adjustment procedure may use a priority scheme in order to determine the adjusted geographic position by prioritizing the radio link from the drone base station to the user equipments or the radio link from the drone base station to the backhaul node. Typically, the radio link from the drone base station to the user equipments may be less prioritized because the user equipments may also be served by an existing, fixed installed, standard base station, whereas the radio link from the drone base station to the backhaul node is essential for the quality of service for all user equipments to be served by the drone base station. Thus, the priority schema may include finding possible drone positions that satisfy a given condition regarding the radio link from the drone base station to the backhaul node, and selecting amongst these positions a drone position that provides good radio link characteristics to the user equipments.

After determining the adjusted geographic position, the drone base station is moved to said adjusted geographic position. The movement may be initiated and controlled by the drone management unit or by the drone base station itself. When arrived at said adjusted geographic position, at least a subset of said candidate user equipments may be handed over to the drone base station in order to serve said subset of candidate user equipments by the drone base station.

According to embodiments, the position of the drone base station may be adjusted based on the local distribution of the candidate user equipments. For example, the local distribution of the candidate user equipments may be determined based on position data available at the (fixed) base station actually serving the candidate user equipments before a handover. In order to serve as many user equipments with a high quality of service, the adjusted geographic position may be determined by prioritizing user equipments which are very close to other user equipments, i.e. the position adjustment procedure focus on groups of user equipments being close to each other. The position of the drone base station may further be adjusted based on the position of the backhaul node.

According to embodiments, the position of the drone base station may be adjusted based on information regarding radio conditions of the active links between the candidate user equipments and a fixed base station serving said candidate user equipments before handing over to the drone base station. For example, only a limited set of user equipments may be selected out of all candidate user equipments based on channel conditions between the respective user equipment and a fixed base station actually serving said candidate user equipment. Thereby, user equipments may be selected which are served with a low quality of service, e.g. below a certain threshold value. The position of the drone base station may be adjusted or optimized only considering said limited set of user equipments because well-served user equipments may not need to be handed over to the drone base station.

According to further embodiments, the position of the drone base station may be adjusted based on information regarding the contour or relief of infrastructure and/or landscape, forbidden drone flight areas, drone battery status and/or parameters of the already installed mobile telecommunication network. Parameters of the already installed mobile telecommunication network may be, for example, self-optimizing network (SON) parameters. By taking said information into account, in principle possible geographic positions for the drone base station are limited, and based on these restricting conditions, an adjusted geographic position providing enhanced channel characteristics can be determined with reduced computational effort.

According to embodiments, the subset of candidate user equipments to be handed over to the drone base station may be determined based on the quality of the radio link between each candidate user equipment and the actually serving fixed base station and/or the bandwidth demand of the user equipment. Typically, the set of user equipments which could be principally served by the drone base station, also referred to as candidate user equipments, is limited and preferably only those candidate user equipments are handed over to the drone base station which are served with a low quality of service and/or show a high bandwidth demand. Thereby an enhanced load sharing between the drone base station and the fixed base station is obtained.

According to embodiments, gathering information regarding the radio link conditions between candidate user equipments and the drone base station and/or between the drone base station and the backhaul node may comprise the step of transmitting a pilot signal, e.g. by the drone base station and/or the backhaul node. A pilot signal may be any signal transmitted outside and independent of the payload data. The pilot signal may be received by the candidate user equipments in order to determine the channel characteristics of the channel between the drone base station and the respective candidate user equipment. For example, a measurement routine may be executed by the candidate user equipments for determining properties of the received pilot signal transmitted by the drone base station. In a similar way, the pilot signal may be received and evaluated by the backhaul node, or transmitted by the backhaul node and received and evaluated by the drone base station.

By means of said measurement routine, the candidate user equipment may derive information regarding channel conditions such as signal strength, channel loss and/or the bit error rate based on the transmitted pilot signal.

According to embodiments, each measurement information obtained while executing the measurement routine may be associated with a time stamp indicating the point of time at which the pilot signal has been received by the user equipment. The time stamp may be any suitable time information. For example, the time stamp may be based on a real-time clock. In addition, the drone base station may store information regarding its geographic position at different points of time by assigning time stamps to said geographic positions while moving the drone base station in a probe area around the initial geographic position. For example, the drone base station may provide a look-up-table comprising a plurality of entries, wherein each entry comprises information regarding its geographic position and the point of time, at which the drone base station has been located at that particular geographic position. By means of said time stamps it is possible to subsequently map the measurement information regarding the radio link conditions between candidate user equipments and the drone base station to geographic positions of the drone base station at which the drone base station has been located when transmitting the pilot tone on which the measurement information was based.

According to embodiments, the mapping of measurement information to the geographic position of the drone base station may be performed within the drone base station. Information regarding radio link conditions between candidate user equipments and the drone base station may be transmitted from the user equipments to the drone base station via a fixed base station serving said candidate user equipments. The drone base station may read out the time stamp associated with the respective measurement information and may determine the geographic positions at which the drone base station has been located when transmitting the pilot tone on which the measurement information was based. This allows an accurate assignment of link quality information to drone positions.

According to alternative embodiments, said mapping may be performed within the drone management unit. In this case, information regarding radio link conditions between candidate user equipments and the drone base station and information regarding the geographic positions of the drone base station may be transmitted to the drone management unit. The information regarding the geographic positions may also include the time stamps indicating at which point of time the drone base station was located at a certain position. By using the time stamp information, the drone management unit is able to correlate the geographic positions of the drone base station with information regarding radio link conditions.

In further embodiments, synchronization between the drone flight path and user equipment measurements for evaluating the best drone position may be realized in that the drone informs the drone management unit about the planed flight path, e.g. when it will start to fly a given predetermined flight pattern. For example, a flight pattern may be applied where the radius from a given initial point is increased (counter-) clockwise starting at the initial location point with a given time interval. If the flight pattern is pre-agreed and prefixed on both sides, the drone management unit can correlate/synchronize the user equipment measurements to the drone position.

According to embodiments, the position adjustment procedure is processed within the drone base station. According to an alternative embodiment, the position adjustment procedure is processed within the drone management unit.

According to embodiments, after moving the drone base station to the adjusted geographic position, a further recording procedure and position optimization procedure may be performed in order to adapt the position of the drone base station according to changing conditions, e.g. because the radio communications conditions permanently (slow or fast) change. The changed conditions may be changed channel conditions, one or more appearing or disappearing user equipments, changed positions of one or more user equipments etc... Thereby, a periodical or event-triggered adaption to changed conditions of the communication system is possible to keep the position of the drone updated even for changing conditions.

According to a further aspect, a device is disclosed, which may comprise at least one measurement unit for gathering information regarding radio link condition between a drone base station and a backhaul node and/or regarding radio link condition between candidate user equipment and the drone base station while the drone base station is moving in a probe area around an initial geographic drone position. In other words, the device performs a radio link condition recording procedure while the drone base station is moving/flying in the probe area, wherein the device may be integrated with the drone base station or may be a separate device within the network.

The device may further comprise a drone including flying/hovering means; wireless base station equipment mounted to the drone; and at least one transmission unit for transmitting pilot signals to be received by the candidate user equipment and/or the backhaul node. The pilot signals may be detected by the candidate user equipment and/or the backhaul node and evaluated to determine information regarding the radio link condition between the drone base station and the backhaul node and/or regarding the radio link condition between the candidate user equipment and the drone base station.

The device may further comprise a position processing unit for determining an adjusted geographic drone position for the drone base station based on the information regarding radio link condition between the drone base station and the backhaul node and/or based on the information regarding radio link condition between the candidate user equipment and the drone base station. Thus, an adjusted geographic drone position is determined where the drone can be positioned to provide improved mobile telecommunication services to the user equipment.

The drone base station may perform the above actions like moving in the probe area and gathering/recording information regarding radio link conditions autonomously, i.e. without being controlled by a remote control unit. A drone management unit could be arranged in the drone base station itself. The drone management unit may determine the adjusted geographic drone position. A mapping of drone positions to measured radio link conditions may be performed by the drone base station. Alternatively, an external remote drone management unit in the network may be provided. The external drone management unit may determine the adjusted geographic drone position based on the gathered information about radio link conditions, possibly performing the mapping of drone positions to measured radio link conditions.

According to a further aspect, a telecommunication system for providing mobile telecommunication services to user equipments is disclosed. The telecommunication system comprises a drone base station with base station equipment mounted on a drone. The telecommunication system further comprises a backhaul node serving the drone base station and providing a communication link to the wired part of the telecommunication system such as a PLMN (public land mobile network). The backhaul node may be adapted to provide a radio connection to the drone base station. The backhaul node may be a stand-alone node or may be integrated in a standard, fixed base station. In addition, the telecommunication system comprises at least one measurement unit, at least one transmission unit and at least one position processing unit. The measurement unit may be arranged at the drone base station for gathering information regarding radio link conditions between the drone base station and a backhaul node while the drone base station is moving in an area around an initial geographic position. The transmission unit may be arranged at the drone base station for transmitting signals to be received by candidate user equipments in order to obtain information regarding radio link conditions between candidate user equipments and the drone base station while the drone base station is moving in the probe area around the initial geographic position. The position processing unit may be configured to provide an adjusted geographic position based on at least one of information regarding radio link conditions between the drone base station and the backhaul node and information regarding radio link conditions between candidate user equipments and the drone base station.

The drone may further comprise a drive unit adapted to move the drone base station to the adjusted geographic position, e.g. one or more rotating rotor blades. The drone may further comprise an onboard control unit to control the flight of the drone. The base station equipment of the drone base station may be configured to serve at least a subset of said candidate user equipments at the adjusted geographic position.

It should be noted that the methods and systems including its preferred embodiments as outlined in the present patent application may be used standalone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein
- Fig. 1: illustrates an example schematic representation of a telecommunication system before handing over a set of user equipments to the drone base station;
- Fig. 2: illustrates an example flow chart of a method for providing telecommunication services by means of a drone base station; and
- Fig. 3: illustrates an example schematic representation of a telecommunication system after handing over a set of user equipments to the drone base station.

Drone base stations are a new concept in telecommunications. The advantage of a drone base station (DBS) is that its position can be dynamically and continuously optimized according to several network parameters. For finding an initial good position for the DBS, existing algorithms for small cell placements could be reused. However, further dynamic update of the position of a DBS may improve network coverage and capacity.

Thus, it is suggested to improve the location of a drone base station in order to optimize the radio conditions of the links both between user equipment (UE) and DBS and between DBS and a backhaul node. The position update mechanism may be based on radio measurement reports of the wireless links between the user and its serving base station, which is either a normal "Standard Base Station" (STD-BS) or a DBS and also based on measurements of the backhaul link between the DBS and the backhaul node. The radio measurements may be executed in the UEs, in the STD-BS, in the DBS or in the backhaul node. As an option, the backhaul node can be implemented inside the STD-BS.

In the following are definitions of the involved network elements: Standard base station (STD-BS): A STD-BS is a traditional base station mounted at a fixed location, e.g., a macro cell or a small cell.

Drone base station (DBS): A drone base station is a base station mounted on a drone and it can act as a small cell to serve UEs in its vicinity, e.g., to provide additional coverage extension or additional capacity at its location. The DBS has a radio link to a backhaul node. The backhaul radio link could be on the same or different Radio Access technology (RAT), on the same or a different frequency band and on the same or a different antenna type than the mobile radio link to the UEs in the network.

Backhaul node: a backhaul node is equipped with a function to backhaul the data from a drone. The backhaul node can be a standalone node or may be integrated in a STD-BS.

Drone management: The network is provided with a "drone management functionality" (drone-mgmt) that could be implemented in any of the network nodes (e.g., STD-BS, Core Network, Backhaul Node).

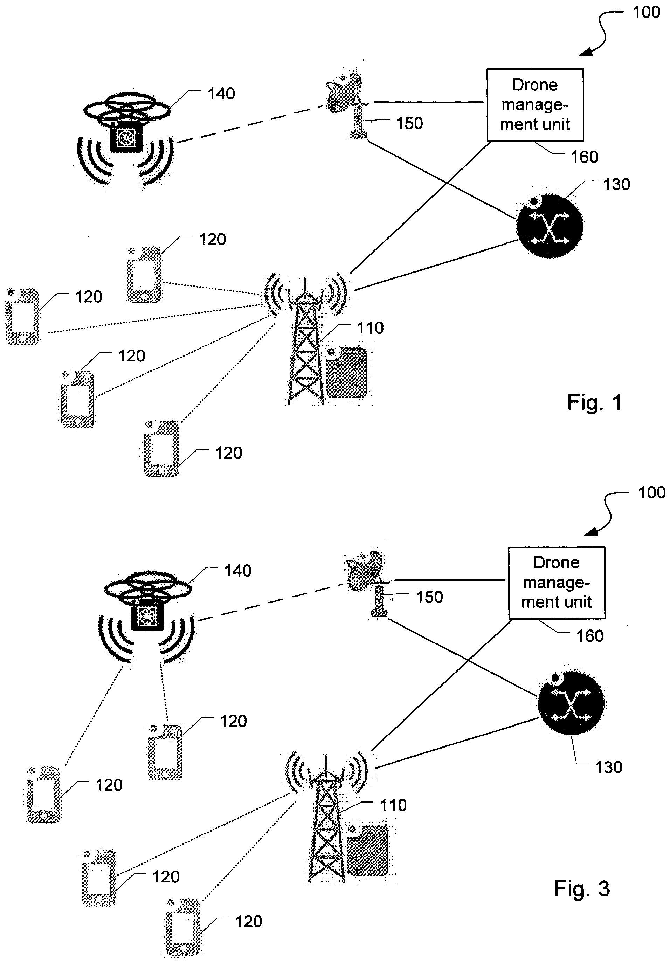

Fig. 1 shows a schematic structure of a mobile telecommunication system 100. The telecommunication system 100 comprises at least one, typically a plurality of base stations 110 for connecting user equipments (UEs) 120 to a core network 130 and finally via switching means to one another or to other user equipment. The base station 110 may be installed at a fixed location and comprises a transceiver for transmitting information to the UEs 120 and receiving information transmitted by the UEs 120.

In order to provide additional mobile telecommunication network coverage to UEs 120, for example, in cases when additional network capacity is needed for a limited period of time, the telecommunication system 100 comprises a drone base station 140. The drone base station 140 comprises a drone being adapted to fly through the air to a certain position and to perform a hover flight at said position, i.e. essentially stay at a certain position over the ground in order to provide telecommunication services in an area nearby said position. The drone base station 140 comprises base station equipment in order to serve UEs 120 with telecommunication services. Base station equipment refers to devices that provide functionality of a base station. Specifically, the drone base station 140 may be adapted to provide a mobile small cell, i.e. a low-powered radio access node comprising a range of 10 meters up to 1 or 2 kilometers. In the following, the drone base station 140 may be also referred to as flying base station, wherein the ground base station 110 may be referred to as standard base station or fixed base station.

The drone base station 140 may be coupled to the core network 130 via a backhaul node 150. The backhaul node 150 may be implemented by a separate network node or may be integrated into a standard base station 110. The backhaul node 150 provides functionality to backhaul data from the drone base station 140, i.e. provide a wireless network link from/to the drone base station 140 in order to connect the drone base station 140 to the core network 130. The wireless network link from/to the drone base station 140 may be based on a microwave connection, point-to-point radio or any other high capacity wireless link that can carry accumulated traffic of the user equipments that are served by the drone base station 140.

In addition, the telecommunication system 100 comprises a drone management unit 160. The drone management unit 160 may be configured to control the actions of the drone base station 140, e.g. initiate the deployment of the drone base station 140, provide flight control data to the drone, control the flight of the drone, control a position optimization procedure described in the following and initiate a landing procedure of the drone, if the additional service provided by the drone base station 140 is not needed any more or the drone battery status is low. The drone management unit 160 may be arranged in the drone base station 140, at a ground carrier for the drone base station 140 that may serve as landing pad and charging station for the drone, or anywhere in the network. The drone management unit 160 may be connected to the core network 130, the at least one standard base station 110 or the backhaul node 150 by means of telecommunication links in order to transmit and receive data. Furthermore, the drone management unit 160 may be implemented in any network node, e.g. a standard base station 110, the backhaul node 150 or a network node of the core network 130.

The operation of the drone base station and the control of its position may be performed according to the following procedures that can be performed in any combination and sequence.

### 1) Activating the drone

For some reasons, e.g. due to a failure of one of the base stations in the network, the network management detects the need for additional capacity or coverage at a certain location. This network management function informs the drone management about the need of a drone at that location. Then, the drone-mgmt triggers the DBS to get active and to move to that specific initial geo position (3D location). The geo location information could consist of geo coordinates (latitude, longitude, terrain altitude), flight altitude, forbidden flying zones, building information, next battery charging location, etc. When the drone has arrived at the initial position, UEs may not be immediately handed over to be served by the DBS.

### 2) Initial improvement of the drone geo location

Once the drone has reached the given geographical position, the position may be dynamically and continuously improved according to one or more of:
- the distribution of users (UEs' locations);
- radio conditions of a pilot signal for candidate links between UEs and the DBS (candidate links refer to links to UEs that potentially could be handed over to the DBS);
- DBS-backhaul link radio condition (e.g., line of sight conditions);
- radio conditions of active links between the UEs and the STD-BS;
- other parameters such as drone battery status, surrounding infrastructure (buildings), allowed and not allowed drone locations, wireless network and self-optimizing network (SON) parameters, e.g., antenna tilt optimization.

In order to obtain DBS pilot measurements, the network may request radio measurement reports from the UEs in the vicinity of the drone; the UEs will execute the measurements and report them to the network. At the same time, the drone is moving in a probe service area nearby the assigned position and keeps information about its position and relative time stamps. By using the time stamps, it is then possible to map UE measurements reports to the DBS positions. The mapping functionality can be implemented either in the drone itself or in the drone management in the network. Given this information, it is possible to process the results in order to provide as output an "optimal" DBS position.

### 3) Handover of the UEs to the DBS

Candidate UEs are handed over to the DBS by using traditional handover procedures.

### 4) Periodic adaptation of the location for the drone radio cell

STD-BS or DBS can trigger a new geo location search for the DBS, e.g., when the density or radio link of DBS-served UEs has changed. The procedure to optimize the location periodically is similar to the initial location improvement.

Periodic adaptation can be driven and initiated
- by the DBS when new UEs have appeared or existing UEs have changed their position or their radio link conditions have changed (e.g. line of sight conditions to the served UEs has changed).
- by the drone-mgmt when a new position is required e.g. because coverage or capacity expansion is needed elsewhere with higher priority.

### 5) Deactivation of the DBS

Deactivation of the DBS radio cell may occur when:
- the DBS is not needed anymore at the current location because the coverage or capacity extension is not required anymore;
- the DBS is running out of battery power; and/or
- flight conditions do not allow the operation of the DBS.

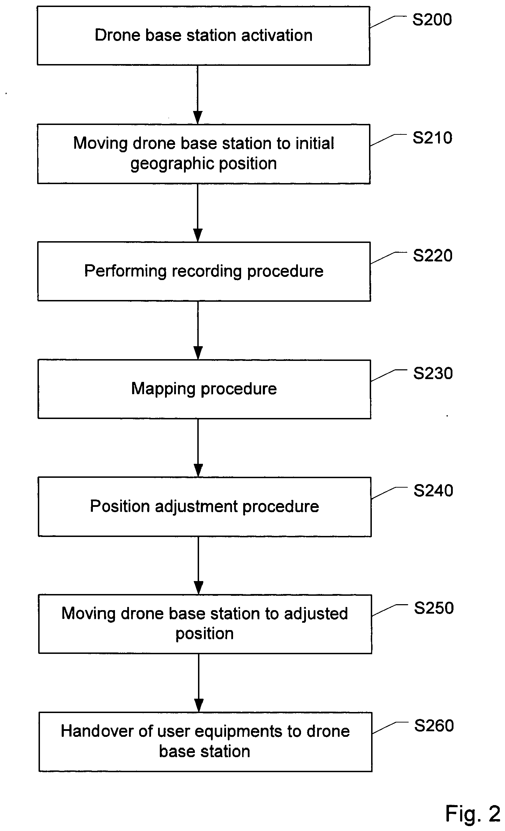

Fig. 2 shows a schematic flow chart of an embodiment for providing additional mobile telecommunication network coverage using a drone base station 140. First, the drone base station 140 may be activated (S200) after the need for additional network capacity or network coverage has been detected. For example, said activation may be triggered by a failure of a standard base station 110 or the need of additional network resources for a limited period of time, e.g. a sports event, a concert etc... For example, a network management entity of the telecommunication system 100 may detect the need for additional capacity or coverage at a certain geographical position. The network management entity may inform a drone management unit 160 about the need of a drone base station 140 at said geographical position. The drone management unit 160 may trigger the activation of the drone base station 140 and provide information regarding an initial geographic position to the drone base station 140. The initial geographic position may include geo-coordinates, e.g. latitude, longitude and terrain altitude. In addition, the drone management unit 160 may provide additional information to the drone base station 140, for example flight altitude or a flight pattern, forbidden flying zones, infrastructure or landscape contour information, charging locations for charging the battery of the drone base station 140 etc...

After receiving said initially geographic position information, the drone base station 140 may move to said initial geographic position (S210). Specifically, the drone base station may perform a flight from a starting position to said initial geographic position. The drone base station 140 may comprise a navigation entity for autonomously controlling the flight from the starting position to the initial geographic position based on the upper-mentioned information received from the drone management unit 160.

The initial geographic position provided by the drone management unit 160 may suffer from poor radio link conditions to candidate user equipments 120 to be served by the drone base station 140 and/or poor radio link conditions between the drone base station 140 and the backhaul node 150. In order to optimize said radio link conditions, a recording procedure is performed (S220) after the drone base station 140 has arrived at the initial geographic position. It is worth mentioning, that at that time the candidate user equipments 120 are still served by a standard base station 110, i.e. are not yet handed over to the drone base station 140.

During the recording procedure, information regarding the radio link conditions between candidate user equipments 120 and the drone base station 140 as well as information regarding the radio link conditions between the drone base station 140 and the backhaul node 150 are gathered. More specifically, said information may comprise characteristics of the radio link such as signal strength, loss coefficient and/or bit error rate on the respective radio link. During the recording procedure, the drone base station 140 is moved in a probe area around the initial geographic position in order to obtain position-dependent information regarding upper-mentioned radio link conditions.

For gathering information regarding the radio link conditions between the drone base station 140 and the backhaul node 150, the drone base station 140 may analyze a signal received from the backhaul node 150. For example, the drone base station 140 may analyze signal strength and/or bit error rate of the signal received from the backhaul node 150. In addition, the drone base station 140 may comprise a timing unit. The timing unit may be synchronized with an external time reference, for example a time transmitter being coupled with an atomic clock. The timing unit may be used for associating timing information to the information regarding the radio link conditions between the drone base station 140 and the backhaul node 150. More specifically, measurement values regarding the radio link conditions are time-stamped by associating timing information to said measurement values in order to indicate, at which point of time the measurement values have been recorded.

Furthermore, the drone base station 140 comprises position tracking means in order to determine at which geographical position the drone base station 140 has been located at the certain point of time. For example, the position tracking means are adapted to store information regarding the geographical position, specifically regarding the three dimensional geographical position (latitude, longitude, altitude) and the point of time, at which the drone base station 140 has been located at said geographical position. The position tracking means may store geographical position data associated with time data in a repository in order to track the flight of the drone base station 140.

During the recording procedure, the drone base station 140 may move/fly in a probe area around the initial geographic position. For example, the drone base station 140 may move in a spherical air space around the initial geographic position, wherein the initial geographic position is in the center of said spherical space. In other words, the drone base station 140 may change its position in a horizontal and/or in a vertical direction nearby the initial geographic position in order to determine a geographic position at which the link conditions between the drone base station 140 and the backhaul node 150 and/or the link conditions between said drone base station 140 and the candidate user equipments 120 are optimized in comparison to the link conditions at the initial geographic position.

The information regarding the radio link conditions between candidate user equipments 120 and the drone base station 140 may be determined by using pilot signals. The drone management unit 160 may trigger the drone base station 140 to transmit pilot signals. In addition, the drone management unit 160 may instruct the one or more base stations (standard base stations) 110 serving the candidate user equipments 120 to configure in the candidate user equipments 120 to measure information regarding the pilot signals transmitted by the drone base station 140. For example, the signal strength, the bit error rate and/or any additional information may be determined by the user equipments 120 in order to assess the quality of the radio link between the respective user equipment 120 and the drone base station 140. It is worth mentioning, that the drone base station 140 is moving in the area as mentioned above, i.e. the quality of the radio link may be time-varying due to changing channel parameters. Each candidate user equipment 120 may provide a set of information comprising information regarding the radio link conditions or characteristics associated with timing information (time stamps) at which the information regarding the radio link condition has been recorded. Each user equipment 120 may provide said set of information to the base station 110 serving said user equipment 120. For example, each user equipment 120 may measure the pilot signals received from the drone base station 140 by using measurement reports defined in the mobile standards, e.g. LTE 3GPP Rel8 or higher. According to LTE 3GPP Rel8, user equipment measurement parameters for performing said measurement may be RRC-triggered measurements and include one or more of: radio frequency, start and stop time for measurements, trigger quantity, reporting quantity, reporting interval, etc... Information about the channel conditions between the drone base station and the backhaul node may be determined in a similar manner based on a pilot signal sent by the drone base station or the backhaul node and respectively received by the other part. Signal strength of the pilot signal may for example be measured and used to determine the adjusted drone position.

After gathering information regarding the radio link conditions between candidate user equipments 120 and the drone base station 140 and the channel conditions between the drone base station and the backhaul node, said information may be associated or mapped with information regarding the position of the drone base station 140 (S230). Thereby, a correlation of the radio link conditions, respectively, the characteristics of the channel between the drone base station 140 and the user equipments 120 and the geographical position of the drone base station 140 is achieved. In other words, after performing said mapping/associating it is possible to determine a geographical position of the drone base station 140 at which the radio link conditions, respectively, the characteristics of the channels between the drone base station 140 and each user equipment 120 are above a certain level in order to obtain a desired quality of service.

The mapping may be obtained by using timing information or time stamps associated with the geographic position data of the drone base station and the recorded information regarding the radio link conditions between candidate user equipments 120 and the drone base station 140. Each measurement value regarding the quality of the radio link and each position data of the drone base station 140 are associated with timing information or a time stamp. Thus, it is possible to determine the quality of the radio link between certain user equipment and the drone base station 140 in dependency to the geographic position of the drone base station 140.

The mapping may either be performed in the drone base station 140 or the drone management unit 160. If the mapping procedure is performed within the drone base station 140, information regarding the radio link conditions between candidate user equipments 120 and the drone base station 140 including said time stamps may be transferred to the drone base station 140. In case that said mapping procedure is performed within the drone management unit 160, information regarding the radio link conditions between candidate user equipments 120 and the drone base station 140 including said time stamps may be transferred to the drone management unit 160. Similarly, information regarding the time-dependent geographic position of the drone base station 140 including said time stamps may be transferred to the drone management unit 160.

For determining an adjusted geographic position of the drone base station 140, it may be possible to take into account all candidate user equipments 120 which provide information regarding the radio link conditions between said candidate user equipment 120 and the drone base station 140. Preferably, only a limited set of candidate user equipments 120 may be taken into account for determining an adjusted geographic position. For example, only those candidate user equipments 120 may be considered which have a low-quality link to the standard base station 110 and/or user equipments 120 with a high bandwidth demand. A selection procedure may be provided in order to determine said limited set of candidate user equipments 120.

The telecommunication system 100 may comprise a position processing unit adapted to execute a position adjustment procedure (S240). The position processing unit may be arranged in the drone base station 140 or the drone management unit 160. The position adjustment procedure may be adapted to correlate the information regarding the radio link conditions between candidate user equipments 120 and the drone base station 140 for each candidate user equipment 120 to be taken into account in order to determine one or more first geographic positions, at which each selected candidate user equipment 120 can be served with a sufficient quality of service. The adjusted drone position may be a trade-off between or a combination of positions determined as optimal user equipment-drone position and drone-backhaul node position. For example, threshold values regarding the channel parameters may be defined and first geographical positions of the drone base station 140 may be determined at which the channel parameters for each selected candidate user equipment 120 are above said threshold values. Similarly, one or more second geographic positions may be determined at which the quality of the channel, respectively, the parameters of the radio link between the drone base station 140 and the backhaul node 150 are above a certain threshold value. Finally, said set of first and second geographic positions may be taken into account for determining an adjusted geographic position of the drone base station 140, at which each selected candidate user equipment 120 can be served with an enhanced quality by the drone base station 140 and at which the quality of the channel between the drone base station 140 and the backhaul node 150 satisfies a given criteria. Preferably, a geographic position may be chosen at which a high quality connection such as a line-of-sight-connection (LOS-connection) between the drone base station 140 and the backhaul node 150 is possible.

After determining the adjusted geographic position, the drone management unit 160 may instruct the drone base station 140 to move to said adjusted geographic position (S250) and stay at said position. After arriving at said adjusted geographic position, the set of selected candidate user equipments 120 may be handed over to the drone base station 140. For handing over the selected candidate user equipments 120, standard handover procedures may be used.

The position adjustment procedure described above may be an initial position adjustment procedure after receiving a trigger for additional network coverage at a certain location which is provided to the drone base station 140. After said initial position adjustment procedure, further position adjustment, e.g. periodical or event-triggered position adjustment may be performed in order to continue service with sufficient quality of service. For example, the further position adjustment may be necessary if the quality of the radio link between the drone base station 140 and one or more user equipments 120 and/or the radio link between the drone base station 140 and the backhaul station 150 has deteriorated. The further position adjustment may be performed by executing the procedures described above, namely executing the recording procedure, the mapping procedure and the position adjustment procedure in order to determine a geographic position which provides enhanced parameters of the radio link between the drone base station 140 and one or more user equipments 120 and/or the radio link between the drone base station 140 and the backhaul station 150. For example, the further position adjustment procedure may be initiated by the drone base station 140 when new user equipments 120 have appeared, request service and should be served by the drone base station 140, existing user equipments 120 have changed their position or the parameters of the radio link between one or more of the user equipments 120 and the drone base station 140 have changed.

The telecommunication system 100 may also provide a deactivation routine in order to deactivate the drone base station 140. The drone base station 140 may, for example, be deactivated if the services provided by the drone base station 140 are not needed anymore at the current position because a network coverage or capacity extension at said position is not required anymore. In addition, the drone base station140 may be deactivated if the drone base station 140 is running out of battery power or the flight conditions do not allow the operation of the drone base station 140 anymore. The deactivation of the drone base station 140 may be initiated by the drone management unit 160. The drone management unit 160 may initiate the drone base station 140 to deactivate the base station equipment and to move to a landing position. Preferably, the landing position may be a battery charging location at which the battery of the drone base station 140 is charged.

Fig. 3 illustrates an example schematic representation of a telecommunication system after handing over a set of user equipments to the drone base station.

Another embodiment for an example drone base station position update procedure is explained next. The described steps may be performed in any combination and sequence.
1) After a trigger event (e.g., capacity extension needed), the drone management instructs the DBS to fly to a position given by coordinates (x1, y1, z1), where z1 is the flight altitude, together with given parameters, e.g., location of drone flight forbidden areas.
2) The DBS reaches the position at coordinates (x1, y1, z1) and establishes a backhaul link connection, if not yet done (see Fig. 1).
3) The DBS informs the drone management that it will initiate, at a given time, the procedure to update its location. The determined best drone location may be at some coordinates (x2, y2, z2), possibly different from (x1, y1, z1). One can also assume that the new position has to be within a given range (delta d) with respect to (x1, y1, z1), i.e., the location search area is a circle or sphere with radius d centered at (x1, y1, z1).
4a) The DBS measures the radio link quality of the backhaul link at each location (x, y, z). Flight parameters will be set according on site conditions, buildings, cranes, other obstacles, or other parameters such as location of drone flight forbidden areas.
4b) The drone management instructs the STD-BS to configure the candidate UEs to make measurements of the pilot signal transmitted by the DBS (e.g., signal strength, bit error rate).
5) UEs send their measurement reports to the STD-BS according to given measurement parameters.
6a) Case 1 "Processing in the DBS": The STD-BS forwards the measurement reports to the DBS. The DBS maps the measurements to the performed flight course of itself together with backhaul link measurements and determines the best geo location (x2, y2, z2) for the measured conditions.
6b) Case 2 "Processing in the Drone Management": The STD-BS forwards the measurement reports to the drone management. In parallel, the DBS forwards the performed flight course and the associated backhaul link measurements to the drone management. The drone management maps all radio link measurements and performed flight course of the drone and determines the best geo location (x2, y2, z2) for the measured conditions. The drone management informs the DBS about the best geo location (x2, y2, z2).
7) The DBS positions itself at determined optimized position (x2, y2, z2).
8) Candidate UEs are handed over to the DBS (see Fig. 3).

Summing up, a method and a telecommunication system for providing mobile telecommunication services to user equipments using a drone base station have been proposed. The method and system is advantageous because mobile communication services with higher quality and capacity are provided, the coverage area of mobile network is increased even on inaccessible terrain and additional network capacity may be provided for a certain time, e.g. during a sports event, concert etc...

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.
The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Method for providing mobile telecommunication services to user equipments (120) using a drone base station (140), the drone base station (140) comprising a base station equipment mounted on said drone base station (140) the method comprising the steps of:
- executing a recording procedure by moving the drone base station (140) in a probe area around an initial geographic position and gathering information regarding radio link conditions between candidate user equipments (120) and the drone base station (140) and regarding radio link conditions between the drone base station (140) and a backhaul node (150),serving the drone base station (140);
- performing a position adjustment procedure for adjusting the position of the drone base station (140) based on said gathered information, the position adjustment procedure providing an adjusted geographic position for the drone base station (140);
- controlling the drone base station (140) to move to the adjusted geographic position; and
- operating the base station equipment at the adjusted geographic position.

2. Method according to claim 1, wherein the position of the drone base station (140) is adjusted based on information regarding radio conditions of active links between candidate user equipments (120) and a fixed base station (110) initially serving said one or more candidate user equipments and/or the radio conditions between the drone base station and the backhaul node.

3. Method according to anyone of the preceding claims, wherein the position of the drone base station (140) is adjusted based on information regarding the contour of infrastructure and/or landscape, forbidden drone flight areas, drone battery status and/or parameters of the already installed mobile telecommunication network.

4. Method according to anyone of the preceding claims, comprising handing over at least a subset of said candidate user equipments (120) to the drone base station (140) in order to serve said subset of candidate user equipments (120) by the drone base station (140).

5. Method according to claim 4, wherein the subset of candidate user equipments (120) to be handed over to the drone base station (140) is determined based on the quality of a radio link of candidate user equipments (120) to the actually serving fixed base station (110) and/or the bandwidth demand of the user equipments (120).

6. Method according to anyone of the preceding claims, wherein gathering information regarding radio link conditions comprises the step of transmitting a pilot signal.

7. Method according to claim 6, wherein a measurement routine is executed by the candidate user equipments (120) for determining properties of the received pilot signal transmitted by the drone base station (140).

8. Method according to claim 7, wherein measurement information obtained while executing the measurement routine is associated with a time stamp indicating the point of time at which the pilot signal has been received by the user equipment (120).

9. Method according to anyone of the preceding claims, further comprising storing information regarding geographic position of the drone base station (140) at different points of time by assigning time stamps to said geographic positions while moving the drone base station (140) in the probe area around the initial geographic position or by a given flight pattern of the drone base station associated with a time interval.

10. Method according to claim 9, wherein information regarding the properties of the received pilot signals is mapped to the geographic position of the drone base station (140) by using said time stamps.

11. Method according to claim 10, wherein said mapping is performed within the drone base station (140), wherein information regarding radio link conditions between candidate user equipments (120) and the drone base station (140) are transmitted to the drone base station (140) via a fixed base station (110) serving said candidate user equipments (120).

12. Method according to claim 10, wherein said mapping is performed within a drone management unit (160), wherein information regarding radio link conditions between candidate user equipments (120) and the drone base station (140), the geographic positions of the drone base station (140) and information regarding radio link conditions between the drone base station (140) and a backhaul node (150) are transmitted to the drone management unit (160)..

13. A drone base station (140) comprising:
- a base station equipment mounted on said drone base station (140);
- means for executing a recording procedure by moving the drone base station (140) in a probe area around an initial geographic position and means for gathering information regarding radio link conditions between candidate user equipments (120) and the drone base station (140) and regarding radio link conditions between the drone base station (140) and a backhaul node (150) serving the drone base station (140);
- means for performing a position adjustment procedure for adjusting the position of the drone base station (140) based on said gathered information, the position adjustment procedure providing an adjusted geographic position for the drone base station (140);
- means for controlling the drone base station (140) to move to the adjusted geographic position; and
- means for operating the base station equipment at the adjusted geographic position.

14. The drone base station (140) of claim 13, further comprising: a drone; a wireless base station equipment mounted to the drone; and at least one transmission unit for transmitting pilot signals to be received by the candidate user equipment and/or the backhaul node (150).

## Patentansprüche

1. Verfahren zum Bereitstellen von mobilen Telekommunikationsdiensten für Teilnehmergeräte (120) unter Benutzen einer Drohnen-Basisstation (140), wobei die Drohnen-Basisstation (140) umfasst eine Basisstationsausrüstung, die an besagter Drohnen-Basisstation (140) montiert ist, wobei das Verfahren die folgenden Schritte umfasst:
- Ausführen eines Aufzeichnungsverfahrens durch Bewegen der Drohnen-Basisstation (140) in einem Prüfbereich um eine geografische Anfangsposition herum und Sammeln von Information in Bezug auf Funkverbindungsbedingungen zwischen Teilnehmergerätekandidaten (120) und der Drohnen-Basisstation (140) und in Bezug auf Funkverbindungsbedingungen zwischen der Drohnen-Basisstation (140) und einem Rücktransport-Knoten (150), der die Drohnen-Basisstation (140) bedient;
- Durchführen eines Positionseinstellungsverfahrens zum Einstellen der Position der Drohnen-Basisstation (140) auf Grundlage besagter gesammelter Information, wobei das Positionseinstellungsverfahren eine eingestellte geografische Position für die Drohnen-Basisstation (140) bereitstellt;
- Steuern der Drohnen-Basisstation (140) zum Bewegen zur eingestellten geografischen Position; und
- Betreiben der Basisstationsausrüstung an der eingestellten geografischen Position.

2. Verfahren nach Anspruch 1, wobei die Position der Drohnen-Basisstation (140) eingestellt wird auf Grundlage von Information in Bezug auf Funkverbindungen aktiver Verbindungen zwischen Teilnehmergerätekandidaten (120) und einer festen Basisstation (110), die zu Beginn besagtes eine oder die mehreren Teilnehmergerätekandidaten bedient, und/oder der Funkbedingungen zwischen der Drohnen-Basisstation und dem Rücktransport-Knoten.

3. Verfahren nach einem beliebigen der vorhergehenden Ansprüche, wobei die Position der Drohnen-Basisstation (140) eingestellt wird auf Grundlage von Information in Bezug auf die Kontur der Infrastruktur und/oder Landschaft, verbotene Drohnen-Flugbereiche, Drohnen-Batteriestatus und/oder Parameter des schon installierten mobilen Telekommunikationsnetzwerks.

4. Verfahren nach einem beliebigen der vorhergehenden Ansprüche, umfassend das Übergeben von mindestens einer Untermenge von besagten Teilnehmergerätekandidaten (120) an die Drohnen-Basisstation (140), um besagte Untermenge von Teilnehmergerätekandidaten (120) durch die Drohnen-Basisstation (140) zu bedienen.

5. Verfahren nach Anspruch 4, wobei die Untermenge von Teilnehmergerätekandidaten (120), die an die Drohnen-Basisstation (140) übergeben werden muss, bestimmt wird auf Grundlage der Qualität der Funkverbindung der Teilnehmergerätekandidaten (120) zur momentan bedienenden festen Basisstation (110) und/oder der Bandweitennachfrage der Teilnehmergeräte (120).

6. Verfahren nach einem beliebigen der vorhergehenden Ansprüche, wobei das Sammeln von Information in Bezug auf die Funkverbindungsbedingungen den Schritt des Übertragens eines Pilotsignals umfasst.

7. Verfahren nach Anspruch 6, wobei eine Messroutine von den Teilnehmergerätekandidaten (120) ausgeführt wird zum Bestimmen von Eigenschaften des empfangenen Pilotsignals, das von der Drohnen-Basisstation (140) übertragen wurde.

8. Verfahren nach Anspruch 7, wobei die Messinformation die während der Ausführung der Messroutine erhalten wird, verbunden ist mit einem Zeitstempel, der den Zeitpunkt angibt, an dem das Pilotsignal von dem Teilnehmergerät (120) empfangen worden ist.

9. Verfahren nach einem beliebigen der vorhergehenden Ansprüche, weiterhin umfassend das Speichern von Information in Bezug auf die geografische Position der Drohnen-Basisstation (140) zu verschiedenen Zeitpunkten durch Zuweisen von Zeitstempeln zu besagten geografischen Positionen, während die Drohnen-Basisstation (140) im Prüfbereich rund um die geografische Anfangsposition bewegt wird, oder durch ein gegebenes Flugmuster der Drohnen-Basisstation, das mit einem Zeitintervall verbunden ist.

10. Verfahren nach Anspruch 9, wobei Information in Bezug auf die Eigenschaften der empfangenen Pilotsignale auf die geografische Position der Drohnen-Basisstation (140) abgebildet wird durch Benutzen besagter Zeitstempel.

11. Verfahren nach Anspruch 10, wobei besagte Abbildung innerhalb der Drohnen-Basisstation (140) durchgeführt wird, wobei die Information in Bezug auf die Funkverbindungsbedingungen zwischen den Teilnehmergerätekandidaten (120) und der Drohnen-Basisstation (140) zur Drohnen-Basisstation (140) über eine feste Basisstation (110) übertragen wird, die besagten Teilnehmergerätekandidaten (120) bedient.

12. Verfahren nach Anspruch 10, wobei besagte Abbildung innerhalb einer Drohnen-Verwaltungseinheit (160) durchgeführt wird, wobei Information in Bezug auf Funkverbindungsbedingungen zwischen Teilnehmergerätekandidaten (120) und der Drohnen-Basisstation (140), die geografischen Positionen der Drohnen-Basisstation (140) und Information in Bezug auf Funkverbindungsbedingungen zwischen der Drohnen-Basisstation (140) und einem Rücktransport-Knoten (150) auf die Drohnen-Verwaltungseinheit (160) übertragen werden.

13. Drohnen-Basisstation (140), umfassend:
- eine Basisstationsausrüstung, die an besagter Drohnen-Basisstation (140) montiert ist;
- Mittel zum Ausführen eines Aufzeichnungsverfahrens durch Bewegen der Drohnen-Basisstation (140) in einem Prüfbereich einer geografischen Anfangsposition und Mittel zum Sammeln von Information in Bezug auf Funkverbindungsbedingungen zwischen Teilnehmergerätekandidaten (120) und der Drohnen-Basisstation (140) und in Bezug auf Funkverbindungsbedingungen zwischen der Drohnen-Basisstation (140) und einem Rücktransport-Knoten (150), der die Drohnen-Basisstation (140) bedient;
- Mittel zum Durchführen eines Positionseinstellungsverfahrens zum Einstellen der Position der Drohnen-Basisstation (140) auf Grundlage besagter gesammelter Information, wobei das Positionseinstellungsverfahren eine eingestellte geografische Position für die Drohnen-Basisstation (140) bereitstellt;
- Mittel zum Steuern der Drohnen-Basisstation (140) zum Bewegen zur eingestellten geografischen Position; und
- Mittel zum Betreiben der Basisstationsausrüstung an der eingestellten geografischen Position.

14. Drohnen-Basisstation (140) von Anspruch 13, weiterhin umfassend:
eine Drohne;
eine drahtlose Basisstationsausrüstung, die an der Drohne montiert ist; und
mindestens eine Übertragungseinheit zum Übertragen von Pilotsignalen, die von dem Teilnehmergerätekandidaten und/oder dem Rücktransport-Knoten (150) empfangen werden.

## Revendications

1. Procédé destiné à fournir des services de télécommunication mobile à des équipements d'utilisateur (120) à l'aide d'une station de base drone (140), la station de base drone (140) comprenant un équipement de station de base monté sur ladite station de base drone (140), le procédé comprenant les étapes suivantes :
- exécuter une procédure d'enregistrement en déplaçant la station de base drone (140) dans une zone d'exploration autour d'une position géographique initiale et recueillir des informations concernant les conditions de la liaison radio entre les équipements d'utilisateur (120) candidats et la station de base drone (140) et concernant les conditions de la liaison radio entre la station de base drone (140) et un noeud de transport arrière (backhaul) (150) desservant la station de base drone (140) ;
- exécuter une procédure de réglage de position pour ajuster la position de la station de base drone (140) en fonction desdites informations recueillies, la procédure de réglage de position fournissant une position géographique ajustée pour la station de base drone (140) ;
- commander la station de base drone (140) afin qu'elle se déplace à la position géographique ajustée ; et
- exploiter l'équipement de station de base à la position géographique ajustée.

2. Procédé selon la revendication 1, dans lequel la position de la station de base drone (140) est ajustée en fonction des informations concernant les conditions radio des liaisons actives entre les équipements d'utilisateur (120) candidats et une station de base fixe (110) desservant initialement ledit ou lesdits équipements d'utilisateur candidats et/ou les conditions radio entre la station de base drone et le noeud de transport arrière (backhaul).

3. Procédé selon l'une quelconque des revendications précédentes, dans lequel la position de la station de base drone (140) est ajustée en fonction des informations concernant le contour de l'infrastructure et/ou du paysage, des zones d'interdiction de vol pour les drones, de l'état de la batterie du drone et/ou des paramètres du réseau de télécommunication mobile déjà installé.

4. Procédé selon l'une quelconque des revendications précédentes, comprenant le transfert d'au moins un sous-ensemble desdits équipements d'utilisateur (120) candidats à la station de base drone (140) afin que la station de base drone (140) desserve ledit sous-ensemble d'équipements d'utilisateur (120) candidats.

5. Procédé selon la revendication 4, dans lequel le sous-ensemble d'équipements d'utilisateur (120) candidats à transférer à la station de base drone (140) est déterminé en fonction de la qualité d'une liaison radio entre les équipements d'utilisateur (120) candidats et la station de base fixe (110) qui les dessert effectivement et/ou la demande de bande passante des équipements d'utilisateur (120).

6. Procédé selon l'une quelconque des revendications précédentes, dans lequel le recueil d'informations concernant les conditions de la liaison radio comprend l'étape de transmission d'un signal pilote.

7. Procédé selon la revendication 6, dans lequel un programme de mesure est exécuté par les équipements d'utilisateur (120) candidats afin de déterminer les caractéristiques du signal pilote reçu transmis par la station de base drone (140).

8. Procédé selon la revendication 7, dans lequel les informations de mesure obtenues en exécutant le programme de mesure sont associées à un horodatage indiquant l'instant auquel le signal pilote a été reçu par l'équipement d'utilisateur (120).

9. Procédé selon l'une quelconque des revendications précédentes, comprenant en outre le stockage d'informations sur la position géographique de la station de base drone (140) à différents instants en attribuant des horodatages auxdites positions géographiques tout en déplaçant la station de base drone (140) dans la zone d'exploration autour de la position géographique initiale ou selon une trajectoire de vol donnée de la station de base drone associée à un intervalle de temps.

10. Procédé selon la revendication 9, dans lequel les informations concernant les caractéristiques des signaux pilotes reçus sont mises en correspondance avec la position géographique de la station de base drone (140) à l'aide desdits horodatages.

11. Procédé selon la revendication 10, dans lequel ladite mise en correspondance est réalisée dans la station de base drone (140), dans lequel les informations concernant les conditions de la liaison radio entre les équipements d'utilisateur (120) candidats et la station de base drone (140) sont transmises à la station de base drone (140) via une station de base fixe (110) desservant lesdits équipements d'utilisateur (120) candidats.

12. Procédé selon la revendication 10, dans lequel ladite mise en correspondance est réalisée dans une unité de gestion de drone (160), dans lequel les informations concernant les conditions de la liaison radio entre les équipements d'utilisateur (120) candidats et la station de base drone (140), la position géographique de la station de base drone (140) et les informations concernant les conditions de la liaison radio entre la station de base drone (140) et un noeud de transport arrière (backhaul) (150) sont transmises à l'unité de gestion de drone (160).

13. Station de base drone (140) comprenant :
- un équipement de station de base monté sur ladite station de base drone (140) ;
- des moyens pour exécuter une procédure d'enregistrement en déplaçant la station de base drone (140) dans une zone d'exploration autour d'une position géographique initiale et des moyens pour recueillir des informations concernant les conditions de la liaison radio entre des équipements d'utilisateur (120) candidats et la station de base drone (140) et concernant les conditions de la liaison radio entre la station de base drone (140) et un noeud de transport arrière (backhaul) (150) desservant la station de base drone (140) ;
- des moyens pour exécuter une procédure de réglage de position destinée à ajuster la position de la station de base drone (140) en fonction desdites informations recueillies, la procédure de réglage de position fournissant une position géographique ajustée pour la station de base drone (140) ;
- des moyens pour commander la station de base drone (140) afin qu'elle se déplace à la position géographique ajustée ; et
- des moyens pour exploiter l'équipement de station de base à la position géographique ajustée.

14. Station de base drone (140) selon la revendication 13, comprenant en outre :
un drone ;
un équipement de station de base sans fil monté sur le drone ; et
au moins une unité de transmission pour transmettre des signaux pilotes destinés à être reçus par les équipements d'utilisateur candidats et/ou le noeud de transport arrière (backhaul) (150).
